# EUROPEAN PATENT SPECIFICATION

(11) **EP 4 271 627 B1**
(45) Date of publication and mention of the grant of the patent: **04.11.2026**
(21) Application number: 21899286.5
(22) Date of filing: 29.06.2021
(51) Int. Cl.: B65D 85/78, B32B 29/00, B65D 65/42, D21H 19/84, D21H 27/10

(54) **ALUMINUM-FREE CORNET CONE PACKAGE**
ALUMINIUMFREIE TÜTENKEGELVERPACKUNG
EMBALLAGE DE CÔNE CORNET EXEMPT D'ALUMINIUM

(30) Priority: 29.12.2020 TR 202022322
(43) Date of publication of application: 08.11.2023
(73) Proprietor: Mondi Kale Nobel Ambalaj Sanayi Ve Ticaret Anonim Sirketi, 34000 Bakirkoy/Istanbul (TR)
(72) Inventor: SAHIN, Umit, Luleburgaz/Kirklareli (TR); ENGIN, Ayse, Luleburgaz/Kirklareli (TR)
(74) Representative: Andrejewski - Honke Patent- und Rechtsanwälte Partnerschaft mbB
(86) International application number: PCT/TR2021/050668
(87) International publication number: WO 2022/146302

(56) References cited:
- WO-A1-2011/061473
- WO-A1-2013/164646
- CN-A- 105 926 368
- GB-A- 732 434
- KR-A- 20090 008 028
- US-A1- 2011 311 756
- US-A1- 2019 039 357

## Description

### Technical Field

The invention relates to a recyclable and environmentally friendly cornet cone package since it does not contain an aluminum layer and contains only a paper layer.

### Prior Art

Today, cornet cone packages are used to present ice creams to consumers. The packages of ice creams, which are currently called cornet, contain an aluminum layer. The aluminum in the package prevents the package from being a recyclable product and creates a negative situation for the environment.

In addition, due to the aluminum contained in the composite structure, which consists of different thicknesses as Al/Paper in both layers according to the current spectrum, existing products cannot meet the regulations in a recyclable and sustainable manner.

A patent similar to the product subject to the invention was not encountered in the patent research. However, references are made below to some patents made in the similar technical field.

WO 2013/164646 A1 relates to a fiber-based material for packaging. The fiber-based material is provided as a web having a barrier layer on both sides. This prefabricated material can then be further processed and, for example, printed on. The barrier layer can than also avoid a migration of printing ink.

US 2011/0311756 A1 discloses a cornet cone package, wherein an outer composition is provided, which is formed from a dye and a binder. This composition can adhere to aluminum as a barrier, wherein the material composition may also be applied in a pattern for graphic design.

US 2019/0039357 A1 relates to a paper-based beverage cup intended to exhibit considerable stability. For example, the cup is intended to withstand five drops from a height of 1 m.

European Patent publication number EP2266894B1 relates to packaging for cornet ice creams. A blank is provided to form a cone packaging suitable for packaging cone ice cream products; the blank has an at least partially curved upper edge, two side edges and at least one circumferential line of weakness located at a distance of 1 mm to 30 mm from and generally parallel to the upper edge of the blank; characterized in that it has a plurality of non-circumferential lines of weakness between at least one circumferential weakness line and the upper edge.

Another patent application numbered TR2017/00278 belonging to the applicant company relates to a windowed cornet package in which all kinds of ice cream prepared from dried and fresh fruits are placed according to the consumer's preference and it includes a window on the said cornet package and a transparent barrier in connection with the said window.

Another patent application numbered TR2018/13006, which belongs to the applicant company, is related to the cone-shaped, easily-teared cornet packaging used in the packaging of cone-shaped cornet-type ice creams. Feature of the invention; is the easy separation of the cornet package from the ice cream cone by tearing the upper tear line and the lower tear line in the concave form in a correct and wide area after the holding protrusion between the upper curve and the lower curve formed in an inward form on the outer edge line forming the opening section.

As a result, due to the aluminum content of the existing cornet cone packages, the existence of problems and the insufficiency of existing solutions made it necessary to make an improvement in the related technical field.

### Object of the Invention

Based on the state of the art, the main object of the invention is, to develop a recyclable and environmentally friendly cornet cone package, as it does not contain an aluminum layer and contains only a paper layer.

Another object of the invention is to produce four layers of the package according to the invention and obtaining the package with three different layer contents, while the number of layers forming the package is six in the prior art and all layer contents are made up of different materials.

Another object of the invention is to develop an environmentally friendly product thanks to the fact that the cornet cone package does not contain aluminum, and also to obtain a package structure that can meet the regulations in a recyclable and sustainable way in accordance with the current specifications.

The subject matter of the invention and the solution to the problem is a cornet cone package as described in claim 1.

### Brief Explanation of the Figures

Figure 1, is a representative sectional view showing layers of the prior art cornet cone package.
Figure 2, is a representative cross-sectional view showing the cone packaging layers of the invention.

### Reference Numbers for the Prior Art

1. Cornet cone package
   1.1. Food type lac layer
   1.2. Print layer
   1.3. Primer lac layer
   1.4. Aluminum layer
   1.5. Adhesive layer
   1.6. Paper layer

### Reference Numbers of the Invention

2. Cornet cone package
2.1. Water-based barrier lac layer
2.2. Print layer
2.3. Paper layer

### Detailed Description of the Invention

The invention relates to a recyclable and environmentally friendly cornet cone package (2) since it does not contain an aluminum layer and contains only a paper layer.

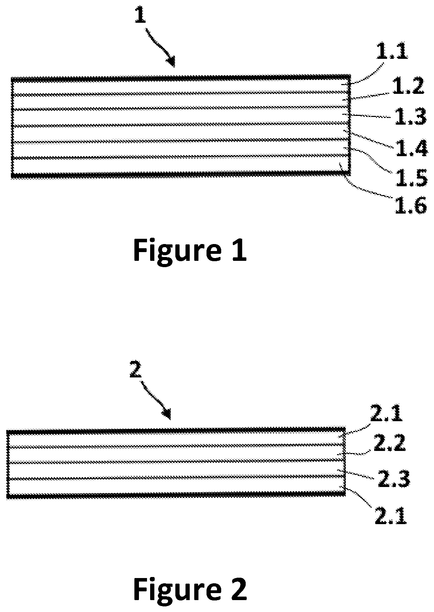

In Figure 1, a representative section view showing the layers of the cornet cone package (1) belonging to the prior art is given. Presently used cornet cone packages (1) consists of food type lac layer (1.1), print layer (1.2), primary lac layer (1.3), aluminum layer (1.4), adhesive layer (1.5) and paper layer (1.6) from outside to inside.

The aluminum in the package prevents the package from being a recyclable product and creates a negative situation for the environment.

In addition, due to the aluminum contained in the composite structure, which consists of different thicknesses as Al/Paper in both layers according to the current spectrum, existing products cannot meet the recyclable regulations in a sustainable manner.

In Figure 2, a representative section view showing the layers of the cornet cone package (2) of the invention is given.

The cornet cone package (2) of the invention contains a water-based barrier lac layer (2.1), a print layer (2.2), a paper layer (2.3) that can be in different weights, and a water-based barrier lac layer (2.1) from the outside to the inside.

During the production of the package according to the invention, a water-based barrier lac layer (2.1) is preferably applied to the side of the print layer (2.2) on the paper layer (2.3) in the range of 70-120 gsm and further that during the production of the package according to the invention, a water-based barrier lac layer (2.1) in the range of 2-5 gsm is applied to the inner surface in contact with the product along with the print layer (2.2) side.

Thanks to the invention; since it does not contain an aluminum layer and contains only a paper layer, it has been turned into a recyclable and environmentally friendly product. In addition, a packaging structure that can meet the regulations in a recyclable and sustainable way in accordance with the current specifications was obtained.

## Claims

1. A cornet cone package (2) which is a recyclable, environmentally friendly and sustainable product, **characterized in that**, it does not contain an aluminum layer and also consists of the following layers in the order from an outside to an inside,
- a first water-based barrier lac layer (2.1),
- a print layer (2.2),
- a paper layer (2.3), and
- a second water-based barrier layer (2.1).

2. Cornet cone package (2) according to Claim 1, **characterized in that** the first water-based barrier lac layer (2.1) is used as the outermost layer and the second water-based barrier lac layer (2.1) is used a innermost layer.

3. Cornet cone package (2) according to Claim 1, **characterized in that** the paper layer (2.3) is in the range of 70-120 gsm and further that said second water-based barrier lac layer (2.1) in the range of 2-5 gsm is applied to the inner surface in contact with the product.

## Patentansprüche

1. Waffeltütenverpackung (2), die ein wiederverwertbares, umweltfreundliches und nachhaltiges Produkt ist, **dadurch gekennzeichnet, dass** sie keine Aluminiumschicht enthält und auch aus den folgenden Schichten in der Reihenfolge von einer Außenseite zu einer Innenseite besteht
- einer ersten Barrierelackschicht (2.1) auf Wasserbasis,
- einer Druckschicht (2.2),
- einer Papierschicht (2.3) und
- einer zweiten Barriereschicht (2.1) auf Wasserbasis.

2. Waffeltütenverpackung (2) nach Anspruch 1, **dadurch gekennzeichnet, dass** die erste Barrierelackschicht (2.1) auf Wasserbasis als die äußerste Schicht verwendet wird und die zweite Barrierelackschicht (2.1) auf Wasserbasis als eine innerste Schicht verwendet wird.

3. Waffeltütenverpackung (2) nach Anspruch 1, **dadurch gekennzeichnet, dass** die Papierschicht (2.3) im Bereich von 70-120 g/m² liegt, und ferner, dass die zweite Barrierelackschicht (2.1) auf Wasserbasis im Bereich von 2-5 g/m² auf die innere Oberfläche in Kontakt mit dem Produkt aufgebracht wird.

## Revendications

1. Emballage de cône de cornet (2), consistant en un produit recyclable, respectueux de l'environnement et durable, **caractérisé en ce qu'**il ne contient pas de couche d'aluminium et comprend également les couches suivantes, dans l'ordre allant de l'extérieur vers l'intérieur,
- une première couche barrière à base d'eau (2.1),
- une couche d'impression (2.2),
- une couche de papier (2.3), et
- une deuxième couche barrière à base d'eau (2.1).

2. Emballage de cône de cornet (2) selon la revendication 1, **caractérisé en ce que** la première couche barrière à base d'eau (2.1) est utilisée comme couche la plus externe et la deuxième couche barrière à base d'eau (2.1) est utilisée comme couche la plus interne.

3. Emballage de cône de cornet (2) selon la revendication 1, **caractérisé en ce que** la couche de papier (2.3) est comprise dans la plage de 70 à 120 gsm, et **en ce que** ladite deuxième couche barrière à base d'eau (2.1) comprise dans la plage de 2 à 5 gsm est appliquée sur la surface intérieure en contact avec le produit.
